# EUROPEAN PATENT APPLICATION

(11) **EP 4 585 413 A1**
(43) Date of publication of application: **16.07.2025**
(21) Application number: 23862930.7
(22) Date of filing: 22.08.2023
(51) Int. Cl.: B32B 5/18, C09D 183/04

(54) **RELEASE FILM, RESIN COMPOSITION, MANUFACTURING METHOD OF RESIN COMPOSITION**

(30) Priority: 09.09.2022 JP 2022143649
(71) Applicant: Toyobo Co., Ltd., Kita-ku Osaka-shi, Osaka 530-0001 (JP)
(72) Inventor: NISHIO, Shotaro, Tsuruga-shi, Fukui 914-8550 (JP); SHIMIZU, Akira, Tsuruga-shi, Fukui 914-8550 (JP)
(74) Representative: Vossius & Partner Patentanwälte Rechtsanwälte mbB
(86) International application number: PCT/JP2023/030143
(87) International publication number: WO 2024/053391

(57) **Abstract**

A release film comprising: a laminated film in which a first coating layer B1 containing a polyester resin containing an inorganic pigment, a void-containing layer A containing voids therein, and a second coating layer B2 containing a polyester resin containing an inorganic pigment are laminated in this order; and a release layer C on at least one side of the laminated film, wherein the void-containing layer A is made of a composition containing a polyester resin, a polyolefin resin, and a silicone resin, and has an apparent density of 0.80 g/cm³ or more and 1.20 g/cm³ or less.

## Description

### TECHNICAL FIELD

The present invention relates to a release film that contains a cavity inside, a resin composition obtained by material recycling of the release film, and a manufacturing method of the resin composition.

### BACKGROUND ART

As a method for obtaining films that have functions similar to those of paper, a method is known in which a large number of minute cavities are contained inside the films.

In this method, an immiscible thermoplastic resin (hereinafter referred to as an immiscible resin) is mixed into a polyester resin to obtain a sheet in which the immiscible resin is dispersed in the polyester resin, and the sheet is stretched at least in one direction. In this method, this causes interfacial peeling between the polyester resin and the immiscible resin, and cavities are thus generated. Examples of such an immiscible resin include polyolefin resins such as polyethylene resin, polypropylene resin, and polymethylpentene resin (see, for example, Patent Documents 1 to 3) and polystyrene resins (see, for example, Patent Documents 4 and 5). Among these, polypropylene resin is particularly preferable from the viewpoint of cavity generating properties and cost performance.

Here, in a case where a polyolefin resin containing a polypropylene resin is simply dispersed in a polyester resin, the dispersed polyolefin particles have a large dispersed diameter. Therefore, cavities are easily generated, but on the other hand, the cavities become larger, thus sufficient concealing properties are not obtained, and film formability is also poor. For this reason, a method in which polyolefin resin is finely dispersed has been adopted. Hitherto, as this finely dispersing method, methods in which dispersants such as a surfactant and polyethylene glycol are added have been proposed (see, for example, Patent Documents 6 and 7).

### PRIOR ART DOCUMENTS

### PATENT DOCUMENTS

Patent Document 1: JP-A-49-134755
Patent Document 2: JP-A-2-284929
Patent Document 3: JP-A-2-180933
Patent Document 4: JP-A-54-29550
Patent Document 5: JP-A-11-116716
Patent Document 6: JP-B-7-17779
Patent Document 7: JP-A-8-252857

### SUMMARY OF THE INVENTION

### PROBLEMS TO BE SOLVED BY THE INVENTION

However, in a case where dispersants such as surfactants and polyethylene glycol are added, there is an effect of finely dispersing polyolefin resin, but the polyolefin resin is deformed during the heat stretching step and heat setting step. Therefore, the obtained cavities are also easily crushed, and sufficient lightness and cushioning properties are not obtained. Since surfactants and polyethylene glycol are inferior in heat resistance, thermal degradation is likely to occur in the melt extrusion step for polyester resin, and the whiteness of the obtained film decreases. In some cases, there is a problem that degradation of polyester resin is promoted and film formability deteriorates.

In recent years, there is also a high demand for films that can be recycled from the viewpoint of the environment. In particular, resource circulation in which a film is recycled and a resource is added to the same film is required. Recyclability of a functional layer applied to a film as a base material is also a major technical problem.

In particular, a release film used as a separator such as a label is discarded after the label is peeled off, and is required to be recycled as a resource. The main reasons for disposal include that a release layer is applied as the functional layer, and an adhesive layer of the label remains on the release film, resulting in poor material recyclability.

An object of the present invention is to improve the above-mentioned problems of the prior art and to provide a release film, a resin composition, and a manufacturing method of the resin composition, which are excellent in environmental compatibility, lightness, film formability, concealing properties, whiteness, and releasability even in a case of mainly using a polyolefin resin as a cavity generating agent and having a release layer.

### MEANS FOR SOLVING THE PROBLEMS

As a result of extensive studies, the present inventors have found out the following by adding a trace amount of silicone resin to a polyolefin resin. In other words, the present inventors have found out that it is possible to improve heat resistance of dispersed polyolefin particles in a polyester resin and to reduce deformation of dispersed polyolefin particles during heat stretching and heat setting. The present inventors have found out that this makes it possible to obtain a release film that is excellent in lightness, film formability, concealing properties, and whiteness. Further, the present inventors have found out that it is possible to suppress the deterioration of coatability and printability, which is a side effect of silicone resin, by adjusting the lamination configuration and the amount of silicone resin added. Furthermore, the present inventors have found that by forming a release layer C with a silicone resin, the silicone resin can be used for a cavity-containing layer A at the time of recycling. The present inventors have also found that the weight of the release film can be further reduced by recycling the release layer C containing the silicone resin and adding the release layer to the cavity-containing layer A. That is, the present inventors have found that a release film excellent in environmental compatibility and lightness can be obtained.

In other words, the release film of the present invention has the following configuration.
1. A release film including:
   a laminated film in which a first coating layer B1 containing a polyester resin containing an inorganic pigment, a cavity-containing layer A containing a cavity inside the cavity-containing layer, and a second coating layer B2 containing a polyester resin containing an inorganic pigment are stacked in this order; and a release layer C on at least one surface of the laminated film,
   in which the cavity-containing layer A includes a composition containing a polyester resin, a polyolefin resin, and a silicone resin, and
   has an apparent density of 0.80 g/cm³ or more and 1.20 g/cm³ or less.
2. The release film according to 1 above, in which the release layer C includes a composition containing a silicone resin.
3. The release film according to 2 above, in which, in the release layer C, a content of the silicone resin is 90% by mass or more and 100% by mass or less with respect to a total mass of the release layer C.
4. The release film according to 1 above, in which the silicone resin of the cavity-containing layer A includes a silicone resin recycled from the release layer C.
5. The release film according to 1 above, in which a content of polydimethylsiloxane in the silicone resin in the cavity-containing layer A is 1 ppm or more and 2,500 ppm or less with respect to a total mass of the cavity-containing layer A.
6. The release film according to 1 above, in which a content of polydimethylsiloxane in the silicone resin in the cavity-containing layer A is 0.005% by mass or more and 2.000% by mass or less with respect to 100% by mass of the polyolefin resin.
7. The release film according to 1 above, in which the inorganic pigment in the first coating layer B1 and the second coating layer B2 is titanium oxide or silica.
8. The release film according to 1 above, in which a ratio of a sum of a thickness of the first coating layer B1 and a thickness of the second coating layer B2 to a sum of the thickness of the first coating layer B1, a thickness of the cavity-containing layer A, and the thickness of the second coating layer B2 is 6% or more and 40% or less.
9. The release film according to 1 above, in which a normal-state peeling force on a surface of the release layer C is 40 mN/50 mm or more and 400 mN/50 mm or less.
10. The release film according to 1 above, in which the release film is used for a separator for a label or a release film for a process.
11. A resin composition including: an inorganic pigment; a polyester resin; a polyolefin resin; and a silicone resin, the resin composition being obtained by material recycling of the release film according to any one of 1 to 10 above.
12. A manufacturing method of a resin composition, including producing a resin composition containing an inorganic pigment, a polyester resin, a polyolefin resin, and a silicone resin by material recycling of the release film according to any one of 1 to 10 above.

### EFFECT OF THE INVENTION

The present invention can provide a release film excellent in environmental compatibility, lightness, film formability, concealing properties, whiteness, and releasability even in a case of mainly containing a polyolefin resin as a cavity generating agent and having a release layer.

### MODE FOR CARRYING OUT THE INVENTION

Hereinafter, the present invention will be described in detail.

A release film of the present invention is a film in which a laminated film and a release layer C are stacked in this order. The laminated film is a cavity-containing polyester film in which a first coating layer B1 that contains a polyester resin containing an inorganic pigment, a cavity-containing layer A that contains cavities inside, and a second coating layer B2 that contains a polyester resin containing an inorganic pigment are stacked in this order. The release layer C is provided on at least one surface of the laminated film. This cavity-containing layer A contains a composition containing a polyester resin, a polyolefin resin, and a silicone resin. The apparent density of this release film is 0.80 g/cm³ or more and 1.20 g/cm³ or less.

The polyester resin that is the main component of the cavity-containing layer A, first coating layer B1, and second coating layer B2 is a polymer that is synthesized from a dicarboxylic acid or an ester-forming derivative thereof and a diol or an ester-forming derivative thereof. Representative examples of such a polyester resin include polyethylene terephthalate, polybutylene terephthalate, and polyethylene-2,6-naphthalate. Among these, polyethylene terephthalate is preferable from the viewpoints of mechanical characteristics and heat resistance, cost, and the like.

These polyester resins may be copolymerized with other components as long as the objects of the present invention are not impaired. Specifically, as the copolymerization components, examples of the dicarboxylic acid component include isophthalic acid, naphthalenedicarboxylic acid, 4,4-biphenyldicarboxylic acid, adipic acid, sebacic acid, and any ester-forming derivative thereof. Examples of the diol component include diethylene glycol, hexamethylene glycol, neopentyl glycol, and cyclohexanedimethanol. Examples of a diol component also include polyoxyalkylene glycols such as polyethylene glycol and polypropylene glycol. The amount of copolymerization is preferably 10 mol% or less, more preferably 5 mol% or less per constituent repeating unit. As the polyester resin, a recycled raw material of PET bottles may be used.

As the production method for a polyester resin, for example, first, the above-mentioned dicarboxylic acid or an ester-forming derivative thereof and the above-mentioned diol or an ester-forming derivative thereof are used as main starting materials. Next, according to a conventional method, an esterification or transesterification reaction is conducted, and then a polycondensation reaction is conducted at a high temperature and a reduced pressure to produce a polyester resin.

The intrinsic viscosity of the polyester resin is preferably 0.50 dl/g or more and 0.9 dl/g or less, more preferably 0.55 dl/g or more and 0.85 dl/g or less from the viewpoints of film formability and recycling properties.

The content of the polyester resin is preferably 70% by mass or more and 97% by mass or less, more preferably 75% by mass or more and 95% by mass or less with respect to 100% by mass of the sum of all components contained in the cavity-containing layer A. In a case where the content of the polyester resin is 70% by mass or more, deterioration of the film formability of the release film can be suppressed. In a case where the content of the polyester resin is 97% or less, cavities can be formed in the release film by addition of polyolefin resin and silicone resin.

Next, a polyolefin resin, which is an immiscible resin used as a cavity generating agent in the present invention, will be described. The release film of the present invention can maintain the cavity generating properties by adopting a specific layer configuration and using a specific polyolefin resin. The polyolefin resin is, for example, a polyethylene resin, a polypropylene resin, or the like, and a polypropylene resin is preferable. Thus, the release film of the present invention has sufficient lightness and cushioning properties as well as is excellent in film formability, concealing properties, and whiteness.

The polyolefin resin used in the present invention is preferably crystalline polyolefin having an olefin unit at preferably 95 mol% or more, more preferably 98 mol% or more. The polyolefin resin is particularly preferably crystalline polyolefin homopolymer having an olefin unit at 100 mol%.

The melt flow rate (MFR) of the polyolefin resin used in the present invention is preferably 1.0 g/10 min or more and 10.0 g/10 min or less, more preferably 1.5 g/10 min or more and 7.0 g/min or less from the viewpoints of cavity generating properties and film formability. In a case where the MFR is 1.0 g/10 min or more and 10.0 g/10 min or less, cavities are likely to be formed since the dispersed polyolefin particles are less likely to be deformed when extruded from a die. Furthermore, in a case where the MFR is 1.0 g/10 min or more and 10.0 g/10 min or less, the dispersibility of dispersed polyolefin particles is also excellent, sufficient concealing properties are obtained, and film formability is also excellent. The melt flow rate (MFR) is a value measured in conformity with JIS K 7210 under conditions of 230°C and a load of 2.16 kg.

The deflection temperature under load of the polyolefin resin used in the present invention is preferably 85°C or more, more preferably 90°C or more, still more preferably 95°C or more from the viewpoint of cavity generating properties. The upper limit of the deflection temperature under load does not need to be particularly limited, but is preferably 135°C or less. In a case where the deflection temperature under load is 85°C or more, cavities are likely to be formed since the dispersed polyolefin particles are less likely to be crushed particularly in the longitudinal stretching step in which the film is heated at a temperature equal to or higher than the glass transition temperature of the polyester resin described later to be stretched. The deflection temperature under load is a value measured in conformity with JIS K 7191-1, 2, Method B when the bending stress of the test piece is 0.45 MPa.

The weight average molecular weight (Mw) of the polyolefin resin used in the present invention is preferably 200,000 or more and 450,000 or less, more preferably 250,000 or more and 400,000 or less from the viewpoints of cavity generating properties and of suppressing thermal degradation during the extrusion and recovery steps. In a case where the Mw is 450,000 or less, the dispersibility of dispersed polyolefin particles is favorable, sufficient concealing properties are obtained, and film formability is also excellent. In a case where the Mw is 200,000 or more, the dispersed polyolefin particles are less likely to be deformed and therefore cavities are likely to be formed. It is preferable that the Mw is 200,000 or more since the decrease in cavity generating properties can be suppressed even when a recycled raw material is used.

The molecular weight distribution (Mw/Mn), which is the ratio of the weight average molecular weight (Mw) to the number average molecular weight (Mn), is preferably 2 or more and 6 or less, more preferably 2 or more and 5 or less. The Mw/Mn is an index indicating the spread of the molecular weight distribution, and it means that the molecular weight distribution is broader as this value is larger. It is preferable that the Mw/Mn is 6 or less since the amount of low molecular weight components decreases, and the decreases in whiteness and cavity generating properties can be suppressed even when a recycled raw material is used. A Mw/Mn ratio of 2 or more is suitable for industrial production from the viewpoint of cost. The weight average molecular weight (Mw) and number average molecular weight (Mn) are values measured by gel permeation chromatography (GPC).

The content of the polyolefin resin is preferably 3% by mass or more and 30% by mass or less, more preferably 5% by mass or more and 25% by mass or less with respect to 100% by mass of the sum of all components contained in the cavity-containing layer A from the viewpoints of cavity generating properties and film formability. In a case where the content of the polyolefin resin is 3% by mass or more and 30% by mass or less, it is possible to form cavities for obtaining sufficient lightness and cushioning properties as well as the film formability is excellent.

Examples of the silicone resin used in the present invention include silicone polymers, for example, a partially crosslinked silicone polymer (that is, silicone resin, which is silicone resin in the narrow sense) and a linear silicone polymer (that is, silicone rubber). Specific examples thereof include methyl silicone resin, methyl phenyl silicone resin, phenyl silicone resin, alkyd-modified silicone resin, polyester-modified silicone resin, urethane-modified silicone resin, epoxy-modified silicone resin, and acryl-modified silicone resin. Silicone resin having a crosslinked structure is preferable from the viewpoint of withstanding the extrusion temperature of the polyester resin, which is the base resin, and the viewpoint of suppressing contamination during steps due to sublimation.

The method for adding the silicone resin is not particularly limited, but may be direct addition in which powder or pellet-like silicone resin is dry-blended with the base resin and added. A master batch may be prepared in advance by melt-mixing the polyester resin, the polyolefin resin, and the silicone resin. Silicone resin-containing polyester pellets obtained by material recycling of the silicone resin contained in the release layer of a release polyester film together with the polyester film may be added.

The amount of the silicone resin added is preferably 1 ppm or more and 10,000 ppm or less, more preferably 100 ppm or more and 8,000 ppm or less with respect to the total mass of the cavity-containing layer A from the viewpoints of cavity generating properties, film formability, and manufacturing cost. The apparent density can be effectively decreased by setting the amount to 1 ppm or more. By setting the amount to 10,000 ppm or less, contamination during steps and deterioration of film formability can be suppressed. Furthermore, the manufacturing cost can be reduced.

The content of polydimethylsiloxane derived from the silicone resin can be determined by NMR (nuclear magnetic resonance) method. The content of the polydimethylsiloxane derived from the silicone resin is preferably 1 ppm or more and 2,500 ppm or less, more preferably 100 ppm or more and 2,400 ppm or less with respect to the total mass of the cavity-containing layer A from the viewpoints of cavity generating properties, film formability, and manufacturing cost. The content is still more preferably 100 ppm or more and 1,400 ppm or less. The upper limit of the content of the polydimethylsiloxane derived from the silicone resin is preferably 2,500 ppm, more preferably 2,400 ppm, and still more preferably 1,400 ppm. The lower limit of the content of the polydimethylsiloxane derived from the silicone resin is preferably 1 ppm, and more preferably 100 ppm.

The apparent density can be effectively decreased by setting the amount to 1 ppm or more. By setting the content to 2,500 ppm or less, contamination during steps and deterioration of film formability can be suppressed. Furthermore, the manufacturing cost can be reduced. Since silicone resin has a crosslinked structure and is insoluble in solvents, the content of polydimethylsiloxane present in the silicone resin determined by the NMR measurement method described later can be taken as an index of the content of silicone resin in the cavity-containing layer A.

The content of polydimethylsiloxane in the silicone resin contained in the cavity-containing layer A determined by the NMR method is preferably 0.005% by mass or more and 2.000% by mass or less with respect to 100% by mass of the polyolefin resin in the cavity-containing layer A. The content is more preferably 0.010% by mass or more and 1.800% by mass or less. The content is still more preferably 0.100% by mass or more and 0.800% by mass or less. The upper limit of the content of polydimethylsiloxane in the silicone resin contained in the cavity-containing layer A determined by the NMR method is preferably 2.000% by mass, more preferably 1.800% by mass, and still more preferably 0.800% by mass. The lower limit of the content of polydimethylsiloxane in the silicone resin contained in the cavity-containing layer A determined by the NMR method is preferably 0.005% by mass, more preferably 0.010% by mass, and still more preferably 0.100% by mass.

By setting the content to 0.005% by mass or more with respect to 100% by mass of the polyolefin resin, the heat resistance of polyolefin resin is improved, and cavities can be efficiently generated without being crushed during stretching. By setting the content to 2.000% by mass or less, deterioration of film formability can be suppressed.

As the cavity-containing layer A contains a small amount of silicone resin, heat resistance can be imparted to the polyolefin resin. Hence, there is an effect that the silicone resin can suppress the thermal degradation of the polyolefin resin during material recycling of the release film and the cavity generating properties can be maintained. Also as the release film, since the cavities are less likely to be crushed in high-temperature environments, it is possible to suppress thickness unevenness due to localized crushing of the polyolefin resin, which is a void generating agent.

As long as the objects of the present invention are not impaired, an immiscible resin other than the polyolefin resin may be contained. The polyolefin resin is contained at preferably 90% by mass or more, more preferably 95% by mass or more, most preferably 100% by mass with respect to 100% by mass of the sum of immiscible resins in the cavity-containing layer A. From the viewpoints of whiteness and cavity generating properties, it is preferable not to contain dispersants such as polyethylene glycol and a surfactant.

These polyester resins or polyolefin resin may contain a small amount of other polymers and antioxidants, heat stabilizers, matting agents, pigments, ultraviolet absorbers, fluorescent whitening agents, plasticizers, other additives or the like as long as the objects of the present invention are not impaired. In particular, it is preferable to contain an antioxidant or a heat stabilizer in order to suppress oxidative degradation of polyolefin resin. The kinds of antioxidant and heat stabilizer are not particularly limited, but include, for example, hindered phenol-based, phosphorus-based, hindered amine-based ones, and these may be used singly or in combination. The amount of these added is preferably 1 ppm or more and 50,000 ppm or less with respect to the total mass of the cavity-containing layer A. In the present invention, excellent whiteness can be secured also when a fluorescent whitening agent is not added to the cavity-containing layer A.

In the present invention, in order to improve the concealing properties and whiteness, it is possible to contain an inorganic pigment in the polyester resin or polyolefin resin of the release film, if necessary. Examples of the inorganic pigment include silica, kaolinite, talc, calcium carbonate, zeolite, alumina, barium sulfate, titanium oxide, and zinc sulfide. Among these, silica, titanium oxide, calcium carbonate, and barium sulfate are preferable from the viewpoint of concealing properties and whiteness. These inorganic pigments may be used singly or in combination of two or more kinds thereof. These inorganic pigments can be contained in the release film by being added to the polyester resin or polyolefin resin in advance.

The method for mixing the inorganic pigment into the polyester resin or polyolefin resin is not particularly limited, but the following method may be mentioned. In other words, examples of the method include a method in which a polyester resin and polyolefin resin are dry-blended and then put directly into the film-forming machine, and a method in which a polyester resin and polyolefin resin are dry-blended and then melt-kneaded using various general kneaders to form a master batch.

The release film of the present invention has a laminated structure in which the first coating layer B1 that contains a polyester resin containing an inorganic pigment, the cavity-containing layer A that contains cavities inside, and the second coating layer B2 that contains a polyester resin containing an inorganic pigment are stacked in this order. Here, in a case where the cavity-containing layer A containing polyolefin resin is exposed to the surface layer, some of the dispersed polyolefin particles exposed cause contamination during steps such as roll contamination. As the cavity-containing layer A is coated with the first coating layer B1 and second coating layer B2 containing an inorganic pigment, there is an effect of preventing a decrease in whiteness. The first coating layer B1 and the second coating layer B2 may be layers having the same configuration or layers having different configurations.

The ratio of the sum of the thickness of the first coating layer B1 and the thickness of the second coating layer B2 to the sum of the thickness of the first coating layer B1, the thickness of the cavity-containing layer A, and the thickness of the second coating layer B2 (hereinafter sometimes also referred to as layer ratio) is preferably 6% or more and 40% or less, more preferably 8% or more and 30% or less from the viewpoint of cavity generating properties and suppression of the exposure of polyolefin resin and silicone resin. In a case where the layer ratio is 6% or more and 40% or less, the exposure of polyolefin resin and silicone resin can be suppressed, and the contact angle of water and the contact angle of diiodomethane can be decreased. In a case where the layer ratio is 6% or more and 40% or less, it is easy to form cavities for obtaining sufficient lightness and cushioning properties.

Examples of the inorganic pigment contained in the first coating layer B1 and second coating layer B2 include silica, kaolinite, talc, calcium carbonate, zeolite, alumina, barium sulfate, titanium oxide, and zinc sulfide. Among these, titanium oxide, calcium carbonate, and barium sulfate are preferable and titanium oxide is particularly preferable from the viewpoint of concealing properties and whiteness. These inorganic pigments may be used singly or in combination of two or more kinds thereof. These pigments can be contained in the film by being added to the polyester resin in advance.

The amount of inorganic pigment added in the first coating layer B1 is not particularly limited, but is preferably 1% or more and 35% by mass or less, more preferably 2% or more and 30% by mass or less with respect to 100% by mass of all components constituting the first coating layer B1. In a case where the amount of inorganic pigment added is 1% by mass or more and 35% by mass or less, it is easy to improve the concealing properties and whiteness of the release film as well as it is possible to improve the film formability and mechanical strength of the release film.

The amount of inorganic pigment added in the second coating layer B2 is not particularly limited, and is preferably the same as the amount of inorganic pigment added in the first coating layer B1.

The laminated film of the present invention includes the release layer C on at least one surface. Thus, the release film can have the following laminated structure. That is, the release layer C, the first coating layer B1, the cavity-containing layer A, and the second coating layer B2 can have, for example, a laminated structure in which the layers are stacked in the order of C/B1/A/B2 or B1/A/B2/C.

The release layer C preferably includes a composition including a silicone resin. Examples of the silicone resin used in the release layer C include silicone polymers, for example, a partially crosslinked silicone polymer (that is, silicone resin, which is silicone resin in the narrow sense) and a linear silicone polymer (that is, silicone rubber). Specific examples thereof include methyl silicone resin, methyl phenyl silicone resin, phenyl silicone resin, alkyd-modified silicone resin, polyester-modified silicone resin, urethane-modified silicone resin, epoxy-modified silicone resin, and acryl-modified silicone resin. From the viewpoint of forming the release layer C by coating, a thermal addition type silicone resin that is crosslinked by applying heat is preferable.

The silicone resin included in the release layer C is preferably 90% by mass or more and 100% by mass or less, and more preferably 94% by mass or more and 100% by mass or less with respect to the total resin in the release layer C. When the content is 90% by mass or more, the label or the like can be peeled off without remaining adhesive.

In addition, a resin composition obtained by material recycling the release layer together may be used. The resin composition is, for example, in the form of pellets, and contains an inorganic pigment, a polyester resin, a polyolefin resin, and a silicone resin. It has been found that the silicone resin contained in the release layer acts when the resin composition is added to a base film, and the apparent density of the base film can be reduced.

A coating amount to the release layer C is preferably 0.030 g/m² or more and 0.200 g/m² or less, and more preferably 0.050 g/m² or more and 0.150 g/m² or less. When the coating amount is 0.030 g/m² or more, the label or the like can be peeled off without remaining adhesive. When the coating amount is 0.200 g/m² or less, the label can be prevented from being easily peeled off.

As a method for providing the coating layer, it is possible to apply a commonly used method such as gravure coating, kiss coating, dip coating, spray coating, curtain coating, air knife coating, blade coating, or reverse roll coating. As the coating stage, it is possible to apply any of a method in which coating is performed before stretching of the film, a method in which coating is performed after longitudinal stretching, or a method in which coating is performed on the surface of the film subjected to the stretching treatment.

A normal-state peeling force of a release surface to which the release layer C is applied in an environment of 25°C and 40%RH is preferably 40 mN/50 mm or more and 400 mN/50 mm or less, and more preferably 50 mN/50 mm or more and 350 mN/50 mm or less. When the normal-state peeling force is 40 mN/50 mm or more, the label or the like can be peeled off without remaining adhesive. When the normal-state peeling force is 400 mN/50 mm or less, the label can be prevented from being easily peeled off.

In the release film of the present invention, a coating layer may be provided on a surface opposite to a surface of the release layer C in order to prevent charging. A polyester resin is preferable as a compound included in the coating layer. In addition to this, it is possible to apply compounds disclosed as a means for improving the adhesive properties of ordinary polyester films, such as a polyurethane resin, a polyester urethane resin, and an acrylic resin.

As a method for providing the coating layer, it is possible to apply a commonly used method such as gravure coating, kiss coating, dip coating, spray coating, curtain coating, air knife coating, blade coating, or reverse roll coating. As the coating stage, it is possible to apply any of a method in which coating is performed before stretching of the film, a method in which coating is performed after longitudinal stretching, or a method in which coating is performed on the surface of the film subjected to the stretching treatment.

The manufacturing method for the release film of the present invention will be described. For example, mixed pellets formed of a composition containing a polyester resin, polyolefin resin, and a silicone resin are dried, then melt-extruded into a sheet from a T-shaped die, brought into close contact with a casting drum by an electrostatic application method or the like, cooled and solidified to obtain an unstretched film.

Next, the unstretched film is stretched and oriented, but the most generally used sequential biaxial stretching method, particularly a method in which an unstretched film is longitudinally stretched in the machine direction and then transversely stretched in the transverse direction, will be described below as an example. First, in the longitudinal stretching step in the machine direction, the film is heated and stretched between two or multiple rolls having different circumferential speeds by 2.5 to 5.0 times. The heating means used at this time may be a method using a heating roll or a method using a non-contact heating medium, or these may be used in combination. At this time, it is preferable to set the temperature of the film to be in a range of (Tg - 10°C) to (Tg + 50°C). Next, the uniaxially stretched film is introduced into a tenter and stretched by 2.5 to 5 times in the transverse direction at a temperature of (Tg - 10°C) to (Tm - 10°C) or less to obtain a biaxially stretched film.

Here, Tg is the glass transition temperature of polyester resin, and Tm is the melting point of polyester. The film thus obtained is preferably subjected to heat treatment if necessary, and the treatment temperature is preferably in a range of (Tm - 60°C) to Tm.

In the laminated film of the present invention, a recycled raw material formed of a used release film of the present invention and the like can also be contained in the cavity-containing layer A. The used release film of the present invention is, for example, a release film scheduled to be discarded after the label is peeled off. In addition, a waste film generated due to a lug portion generated in a film forming step, a breakage trouble, and the like can also be used as the recycled raw material.

Also in a case where a recycled raw material is added to the cavity-containing layer A, if the recycled raw material of the release film of the present invention is used, the cavity generating properties can be maintained since a small amount of silicone resin is added to the polyolefin resin. In particular, since the release layer C containing a silicone resin is applied, the silicone resin contained in the release layer C can further assist the cavity generating properties. Thus, sufficient lightness and cushioning properties are imparted to the release film, and a release film excellent in concealing properties and whiteness can be obtained. In particular, in today's world where it is required to consider environmental impacts, since used release films are subjected to material recycling, and the amount of recycled raw material added increases more than before. However, if a silicone resin is added, the cavity generating properties can be maintained also in a case where the addition amount is increased.

The amount of recycled raw material added is preferably 5% to 80% by mass with respect to 100% by mass of the total mass of the cavity-containing layer A from the viewpoints of reducing raw material costs, whiteness, and film formability.

The first coating layer B1 or the second coating layer B2 may contain a recycled raw material, and preferably does not contain the recycled raw material from the viewpoint of avoiding deterioration of whiteness and exposure of polyolefin resin in the recycled raw material.

The apparent density of the release film in the present invention is preferably 0.80 g/cm³ or more and 1.2 g/cm³ or less, more preferably 0.80 g/cm³ or more and 1.10 g/cm³ or less. In a case where the apparent density is 0.80 g/cm³ or more and 1.20 g/cm³ or less, the total amount of cavities in the release film becomes suitable, and it is easy to handle the film during post-processing such as printing and during use. In a case where the apparent density is 0.80 g/cm³ or more and 1.20 g/cm³ or less, sufficient lightness and cushioning properties are obtained.

In particular, the release film of the present invention is excellent in lightness, film formability, concealing properties, and whiteness even when the apparent density is 0.80 to 1.10 by containing a small amount of silicone resin.

The apparent density is a value obtained by the measurement method described in the evaluation methods described later.

The release film in the present invention has a total light transmittance of preferably 30% or less, more preferably 25% or less. In a case where the total light transmittance is 30% or less, sufficient concealing properties are obtained. For example, in a case where the film is used for a label and the like, the image printed on the label is clear. The total light transmittance is a value in terms of 50 µm thickness obtained by the measurement method described in the evaluation methods described later.

The release film in the present invention preferably has a color tone b value of 4.0 or less, more preferably 3.0 or less. In a case where the color tone b value is greater than 4.0, the whiteness is inferior, and the clearness at the time of printing may be inferior and the commercial value may be impaired when the film is formed into a label and the like.

The thickness of the release film of the present invention is arbitrary, and is preferably 20 µm or more and 300 µm or less**.**

As described above, the release film according to the present invention can, for example, suppress the thermal degradation of polyolefin resin during processing and can maintain the cavity generating properties as the cavity-containing layer A contains a small amount of silicone resin. For this reason, the release film according to the present invention has excellent lightness, film formability, concealing properties, and whiteness even when the apparent density is 0.80 to 1.20.

Thus, the release film according to the present invention is suitably used for a separator of a label, a polarizing plate, a release film used in the manufacture of a laminated ceramic capacitor, and the like.

The present invention may employ a manufacturing method for producing a resin composition by material recycling of the release film according to the present invention. The resin composition is, for example, in the form of pellets, and contains an inorganic pigment, a polyester resin, a polyolefin resin, and a silicone resin. Specifically, in this manufacturing method, for example, the release film according to the present invention is pulverized into a predetermined size by a pulverizer, supplied to a uniaxial or biaxial extruder, extruded at a predetermined temperature, cooled, and then granulated into pellets by a granulator. The predetermined size is, for example, 16 mm² or more and 64 mm² or less. The predetermined temperature is, for example, 250°C or higher and 300°C or lower.

### EXAMPLES

Hereinafter, the present invention will be specifically described with reference to Examples. The present invention is not limited to Examples described below. The respective evaluation items in Examples and Comparative Examples were measured by the following methods.

### (1) Film formability

The film formability was evaluated as follows based on the number of breaking when the film was fabricated in 2 hours of fabrication time under the film forming conditions described in the fabrication of laminated film described later.
∘: No breaking
△: 1 to 3 times of breaking
×: 4 or more times of breaking, film formation is impossible

### (2) Apparent density

The release film was cut into four sheets of 5.0 cm square, the four sheets were stacked, the total thickness was measured to four effective digits at ten different locations using a micrometer, and the average value of the thicknesses of the four stacked sheets was determined. This average value was divided by 4 and rounded to three effective digits to obtain the average thickness per sheet (t: µm). The mass (w: g) of four sheets of the same sample was measured using an automatic top-pan balance to four effective digits, and the apparent density was determined by the following equation. The apparent density was rounded to three effective digits. Apparent density (g/cm3) = w/(5.0 × 5.0 × t × 10-4 × 4)

### (3) Total light transmittance

The release film was measured using a haze meter (NDH5000, manufactured by Nippon Denshoku Industries Co., **Ltd.)** and **converted into a value per 50** µm **film thickness.** The same measurement was performed 3 times and the arithmetic mean value thereof was adopted.

### (4) Color tone b value

The color tone b value of the surface opposite to the release layer C of the release film was measured in conformity with JIS-8722 using a color-difference meter (ZE6000) manufactured by Nippon Denshoku Industries **Co.,** Ltd. It is judged that the whiteness is higher and the yellowness is weaker as the color tone b value is smaller.

### (5) Measurement of polydimethylsiloxane content of layer A

The laminated film obtained by physically scraping the release layer C with a cutter blade was dissolved in 0.1 ml of CDCl3 (deuterated chloroform)/HFIP-d (deuterated hexafluoroisopropanol) (1/1 volume ratio), then 0.5 ml of TCE (tetrachloroethane)-d was added, and dissolution was performed at 130°C. The solution was subjected to H-NMR measurement at 120°C, and the mass ratio of polydimethylsiloxane was calculated from the ratio of the acquired integral values of components. As the peak of polydimethylsiloxane, a peak detected near 0.2 ppm in the NMR spectrum was used. The content of polydimethylsiloxane in the cavity-containing layer A was calculated by physically scraping the release layer C with a cutter blade, then observing the cross section, measuring the thicknesses of a layer A, a layer B1, and a layer B2, and using the layer ratio calculated therefrom. Since silicone resin is cross-linked and contains a large amount of insoluble components, it is difficult to determine the amount of silicone resin added, but the above-described method makes it possible to determine the quantity of soluble polydimethylsiloxane in silicone resin. It has been revealed that there is a correlation between the amount of silicone resin added and the polydimethylsiloxane content.

### (6) Measurement of mass ratio of polypropylene resin content to polydimethylsiloxane content

H-NMR measurement was carried out in the same manner as above except that the release layer C was not scraped, and the mass ratio was calculated from the ratio of the integral values of the peaks attributed to polypropylene resin and polydimethylsiloxane in the acquired NMR spectrum.

### (7) Evaluation of normal-state peeling force of release surface

The surface (hereinafter, may be referred to as a "release surface") of the release layer C of the release film was bonded onto an adhesive layer of an acrylic adhesive tape (Nitto 31B, 25 mm wide, manufactured by Nitto Denko Corporation), a 5 kg cylindrical iron body was rolled back and forth once from thereabove, and then left for 24 hours under conditions of 20°C and 15%RH, and then using Tensilon, peeling load was measured during peeling at a pulling speed of 300 mm/min at a peeling angle of 90 degrees. The resulting value was doubled, and the unit was converted to mN/50 mm.

### (Example 1)

### [Production of titanium oxide master pellet (M1)]

With 50% by mass of polyethylene terephthalate resin having an intrinsic viscosity of 0.62, 50% by mass of anatase type titanium dioxide having an average particle size of 0.3 µm (by electron microscopy) was mixed. The mixture was then fed into a vented twin-screw extruder and kneaded to produce titanium oxide-containing master pellets (M1).

### [Production of silicone resin S]

Heat-curing silicone resin (KS-774, manufactured by Shin-Etsu Chemical Co., Ltd.) was diluted with a solvent, 3 parts by mass of a catalyst (CAT-PL-3, manufactured by Shin-Etsu Chemical Co., Ltd.) was added to 100 parts by mass of the silicone resin, and the mixture was heated at 150°C for 60 seconds. After heating, the cured silicone resin was powdered to obtain silicone resin S.

### [Fabrication of unstretched film]

Mixed were 93% by mass of polyethylene terephthalate resin having an intrinsic viscosity of 0.62, 6.92% by mass of polypropylene resin having MFR = 2.5, Mw = 320,000, Mw/Mn = 4.0, and deflection temperature under load = 92°C, and 800 ppm of silicone resin S. The mixture was then dried in a vacuum to obtain a raw material for the cavity-containing layer A. Meanwhile, 30% by mass of the titanium oxide-containing master pellets (M1) and 70% by mass of polyethylene terephthalate resin having an intrinsic viscosity of 0.62 were pellet-mixed. The mixture was then dried in a vacuum to obtain a raw material for the first coating layer B1 and second coating layer B2. These raw materials were fed into separate extruders, melted at 285°C, and stacked so that the first coating layer B1, the cavity-containing layer A, and the second coating layer B2 were in the order B1/A/B2. The laminated body was joined using a feedblock so that the thickness ratio was 10/80/10. The joined body was extruded from a T-die onto a cooling drum adjusted to 30°C to fabricate an unstretched film having a two-kind three-layer configuration.

### [Fabrication of laminated film]

A laminated film was fabricated under the following film forming conditions. In other words, the obtained unstretched film was uniformly heated to 70°C using heating rolls, and longitudinally stretched between two pairs of nip rolls having different circumferential speeds by 3.4 times. At this time, as an auxiliary heating device for the unstretched film, an infrared heater (rated power: 20 W/cm) equipped with a gold reflective film in the middle of nip rolls was disposed on the two opposing surfaces of the film (at a distance of 1 cm from the film surface) to heat the film. The uniaxially stretched film thus obtained was guided to a tenter, heated to 140°C, and transversely stretched by 4.0 times, the width of the film was fixed, heat treatment was performed at 235°C, and the film was then relaxed at 210°C by 3% in the transverse direction to obtain a laminated film having a thickness of 50 µm.

### [Production of release film]

A curable silicone resin (KS-774 manufactured by Shin-Etsu Chemical Co., Ltd.) was diluted in a mixed solvent of methyl ethyl ketone and toluene, and 3% by mass of a catalyst (CAT-PL-3 manufactured by Shin-Etsu Chemical Co., Ltd.) was added to the solution with respect to 100% by mass of the silicone resin to prepare a solution having a total solid content concentration of 1.5% by mass. This solution was applied to one surface of the laminated film by a roll coating method as a conventional method so that the thickness of the release layer C after drying was 0.10 g/m². As a result, a release film was obtained in which the release layer C, the first coating layer B1, the cavity-containing layer A, and the second coating layer B2 were stacked in the order of C/B1/A/B2. The heat-drying by the roll coating method was performed at 150°C for 20 seconds. The results of the apparent density, the normal-state peeling force of the release surface, the color tone b value, the total light transmittance, and the film formability are presented in Table 1.

### [Production of recycled raw material]

The release film prepared in Comparative Example 1 below was pulverized by a 4 mm hole screen at a speed of 100 kg/hour in a pulverizer to obtain a pulverized product of the film. The obtained pulverized product was charged into an extrusion granulator to obtain a recycled raw material.

### (Examples 2, 3, 5, 7, and 8)

A release film was obtained in the same manner as in Example 1 except that the raw material ratio for the cavity-containing layer A was changed as presented in Table 1 in Example 1.

### (Example 4)

A release film was obtained in the same manner as in Example 1 except that the raw material ratio for the cavity-containing layer A and the layer ratio were changed as presented in Table 1 in Example 1.

### (Example 6)

A release film was obtained in the same manner as in Example 1 except that the coating amount for forming the release layer C was changed to a half of that in Example 1.

### (Example 9)

A cavity-containing polyester film was obtained in the same manner as in Example 1 by using 31% of a recycled raw material of PET bottles for a part of polyethylene terephthalate although the raw material ratio of the cavity-containing layer A was the same in Example 1.

### (Example 10)

### [Production of silica-containing master pellet (M2)]

Silica having an average particle size of **3.4** µm was mixed in an amount of 7,200 ppm with a polyethylene terephthalate resin having an intrinsic viscosity of 0.62. The mixture was then fed into a vented twin-screw extruder and kneaded to produce silica-containing master pellets (M2).

In the fabrication of an unstretched film, 91.5% by mass of the silica-containing master pellet (M2) and 8.5% by mass of polyethylene terephthalate resin having an intrinsic viscosity of 0.62 were pellet-mixed. The mixture was then dried in a vacuum to obtain a raw material for the first coating layer B1 and second coating layer B2. A cavity-containing polyester film was obtained in the same manner as in Example 1 except for the above.

### (Comparative Example 1)

A release film was obtained in the same manner as in Example 1 except that the amount of silicone resin in the cavity-containing layer A was changed to 0 ppm and the content of polyethylene terephthalate resin was changed to 93.08% by mass in Example 1. Since the release film of Comparative Example 1 has an apparent density of more than 1.20 g/cm³, Comparative Example 1 is outside the scope of the present invention. For this reason, the lightness and cushioning properties were poor. Since the mass is large, the manufacturing cost also increases.

### (Comparative Example 2)

A release film was obtained in the same manner as in Example 1 except that the raw material ratio for the cavity-containing layer A was changed as presented in Table 1 in Example 1. In Comparative Example 2, the content of polydimethylsiloxane in the silicone resin in the cavity-containing layer A is more than 2,500 ppm with respect to the total mass of the cavity-containing layer A, which is outside the scope of the present invention. For this reason, the film formability in Comparative Example 2 was poor compared to the film formability in Examples 1 to 10.

As described above, the release film according to the present invention can, for example, suppress the thermal degradation of polyolefin resin during processing and can maintain the cavity generating properties as the cavity-containing layer A contains a small amount of silicone resin. For this reason, the release film according to the present invention has excellent lightness, film formability, concealing properties, and whiteness even when the apparent density is 0.80 to 1.20. In particular, the release film according to Examples 2 to 5 has excellent lightness, film formability, concealing properties, and whiteness even when the apparent density is 0.80 to 1.10.

**[Table 1]**

| | | | Unit | Example 1 | Example 2 | Example 3 | Example 4 | Example 5 | Example 6 | Example 7 | Example 8 | Example 9 | Example 10 | Comparative Example 1 | Comparative Example 2 |
|---|---|---|---|---|---|---|---|---|---|---|---|---|---|---|---|
| Layer A | Raw material 1 | Polyethylene terephthalate resin | wt% | 93.00 | 87.75 | 82.50 | 82.50 | 81.70 | 87.75 | 61.20 | 18.00 | 93.00 | 87.75 | 93.08 | 86.00 |
| | Raw material 2 | Polypropylene resin | wt% | 6.92 | 12.11 | 17.30 | 17.30 | 17.30 | 12.11 | 13.80 | 7.00 | 6.92 | 12.11 | 6.92 | 12.00 |
| | Raw material 3 | Silicone resin | ppm | 800 | 1400 | 2000 | 2000 | 10000 | 1400 | 0 | 0 | 800 | 1400 | 0 | 20000 |
| | Raw material 4 | Recycled raw material | wt% | 0 | 0 | 0 | 0 | 0 | 0 | 25 | 75 | 0 | 0 | 0.00 | 0.00 |
| | Amount of polydimethylsiloxane in layer A | | ppm | 118 | 196 | 270 | 270 | 1300 | 196 | 75 | 225 | 118 | 196 | 0 | 2700 |
| | Mass ratio of polydimethylsiloxane/ polypropylene resin in layer A | | wt% | 0.17 | 0.16 | 0.16 | 0.16 | 0.75 | 0.16 | 0.05 | 0.32 | 0.17 | 0.16 | 0.00 | 2.25 |
| Layer C | | Silicone resin | wt% | 100 | 100 | 100 | 100 | 100 | 100 | 100 | 100 | 100 | 100 | 100 | 100 |
| Layer ratio of base material | | First coating layer B1 | % | 10 | 10 | 10 | 5 | 10 | 10 | 10 | 10 | 10 | 10 | 10 | 10 |
| | | Cavity-containing layer A | % | 80 | 80 | 80 | 90 | 80 | 80 | 80 | 80 | 80 | 80 | 80 | 80 |
| | | Second coating layer B2 | % | 10 | 10 | 10 | 5 | 10 | 10 | 10 | 10 | 10 | 10 | 10 | 10 |
| Coating amount to release layer | | Release layer C | g/m² | 0.10 | 0.10 | 0.10 | 0.10 | 0.10 | 0.05 | 0.10 | 0.10 | 0.10 | 0.10 | 0.10 | 0.10 |
| Apparent density | | | g/cm³ | 1.18 | 1. 03 | 0.97 | 0.93 | 0.82 | 1.04 | 0.99 | 0.94 | 1.19 | 1.15 | 1.22 | 0.75 |
| Normal-state peeling force of release surface | | | mN/50 mm | 80 | 81 | 81 | 84 | 90 | 60 | 81 | 81 | 80 | 80 | 80 | 94 |
| Whiteness | | Color tone b value | - | 1.2 | 1.2 | 1.2 | 1.2 | 1.1 | 1.2 | 1.2 | 1.2 | 1.2 | 1.6 | 1.2 | 1.1 |
| Concealing properties | | Total light transmittance | % | 23 | 21 | 20 | 20 | 18 | 21 | 20 | 20 | 23 | 45 | 24 | 17 |
| Film formability | | Film formability | - | ○ | ○ | ○ | ○ | ○ | ○ | ○ | ○ | ○ | ○ | ○ | △ |

### INDUSTRIAL APPLICABILITY

As described above, the release film of the present invention is excellent in environmental compatibility, lightness, film formability, concealing properties, whiteness, and releasability, and therefore, is suitably used, for example, for a separator of a label, a polarizing plate, a release film used in the manufacture of a laminated ceramic capacitor, and the like.

## Claims

1. A release film comprising:
a laminated film in which a first coating layer B1 containing a polyester resin containing an inorganic pigment, a cavity-containing layer A containing a cavity inside the cavity-containing layer, and a second coating layer B2 containing a polyester resin containing an inorganic pigment are stacked in this order; and a release layer C on at least one surface of the laminated film,
wherein the cavity-containing layer A includes a composition containing a polyester resin, a polyolefin resin, and a silicone resin, and
has an apparent density of 0.80 g/cm³ or more and 1.20 g/cm³ or less.

2. The release film according to claim 1, wherein the release layer C includes a composition containing a silicone resin.

3. The release film according to claim 2, wherein in the release layer C, a content of the silicone resin is 90% by mass or more and 100% by mass or less with respect to a total mass of the release layer C.

4. The release film according to claim 1, wherein the silicone resin of the cavity-containing layer A includes a silicone resin recycled from the release layer C.

5. The release film according to claim 1, wherein a content of polydimethylsiloxane in the silicone resin in the cavity-containing layer A is 1 ppm or more and 2,500 ppm or less with respect to a total mass of the cavity-containing layer A.

6. The release film according to claim 1, wherein a content of polydimethylsiloxane in the silicone resin in the cavity-containing layer A is 0.005% by mass or more and 2.000% by mass or less with respect to 100% by mass of the polyolefin resin.

7. The release film according to claim 1, wherein the inorganic pigment in the first coating layer B1 and the second coating layer B2 is titanium oxide or silica.

8. The release film according to claim 1, wherein a ratio of a sum of a thickness of the first coating layer B1 and a thickness of the second coating layer B2 to a sum of the thickness of the first coating layer B1, a thickness of the cavity-containing layer A, and the thickness of the second coating layer B2 is 6% or more and 40% or less.

9. The release film according to claim 1, wherein a normal-state peeling force on a surface of the release layer C is 40 mN/50 mm or more and 400 mN/50 mm or less.

10. The release film according to claim 1, wherein the release film is used for a separator for a label or a release film for a process.

11. A resin composition comprising: an inorganic pigment; a polyester resin; a polyolefin resin; and a silicone resin, the resin composition being obtained by material recycling of the release film according to any one of claims 1 to 10.

12. A manufacturing method of a resin composition, comprising producing a resin composition containing an inorganic pigment, a polyester resin, a polyolefin resin, and a silicone resin by material recycling of the release film according to any one of claims 1 to 10.
